# EUROPEAN PATENT SPECIFICATION

(11) **EP 2 652 441 B1**
(45) Date of publication and mention of the grant of the patent: **13.09.2017**
(21) Application number: 11848295.9
(22) Date of filing: 09.12.2011
(51) Int. Cl.: G01C 3/08, G01C 15/00, G01S 17/02, G01S 17/08, G01S 7/497

(54) **MOBILE MEASUREMENT DEVICES, INSTRUMENTS AND METHODS**
MOBILE MESSVORRICHTUNGEN, -INSTRUMENTE UND -VERFAHREN
DISPOSITIFS, INSTRUMENTS ET PROCÉDÉS DE MESURE MOBILES

(30) Priority: 13.12.2010 US 422542 P
(43) Date of publication of application: 23.10.2013
(73) Proprietor: IKEGPS Group Limited, Wellington 6021 (NZ)
(72) Inventor: VAN TOORENBURG, Leon Mathieu Lammers, Wellington 6012 (NZ); GOLD, Jeremy James, Wellington 6012 (NZ); REDINGTON, Simon Peter, Wellington 6037 (NZ); REID, Grant Alexander, Lower Hutt (NZ)
(74) Representative: Gosnall, Toby
(86) International application number: PCT/NZ2011/000257
(87) International publication number: WO 2012/081995

(56) References cited:
- EP-A1- 0 874 218
- WO-A1-2004/036246
- US-A1- 2007 030 348
- US-A1- 2008 266 541
- US-A1- 2008 266 541

## Description

### FIELD OF THE INVENTION

The invention relates to a data capture method and mobile devices for capturing image and measuring positions.

### BACKGROUND OF THE INVENTION

Devices that capture data from various combinations of sensors are used in many applications. Such devices including sensors that require alignment or calibration are generally aligned or calibrated in the factory. The devices are generally suitable for performing a specific dedicated task but not suitable for other purposes. This leads to high cost and for some applications the cost cannot be justified.

WO-A-2004/036246 discloses the use of a range finder and a camera to provide a range finding function. US-A-2008/266541 discloses a handheld instrument that includes a camera and display and a laser rangefinder that fits into a compartment.

It is an object of the invention to provide a data capture method for augmenting the sensors provided in standard consumer electronics devices, the resulting method being capable of capturing images and precise positional data.

It is a further object of the invention to provide a data capture method that enables user alignment of a camera and a laser rangefinder.

It is a further object of the invention to provide a data capture method that enables user alignment of a camera, laser rangefinder and one or more orientation sensors.

Each object is to be read disjunctively with the object of at least providing the public with a useful choice.

The present invention provides a data capture method as defined in claim 1. Optional features of the method are the subject of claims 2 to 15.

### EXEMPLARY EMBODIMENTS

According to one exemplary embodiment there is provided a data capture method including: mounting a rangefinder module to a portable device, the rangefinder module including a laser rangefinder emitting and detecting a rangefinder beam and the portable device including a camera and a display, such that, in a mounted state, the laser rangefinder and camera are in fixed relation to each other. A direction of the laser rangefinder is determined by: capturing one or more alignment images using the camera; determining from the image or images a position of the rangefinder beam in the image or images; and determining from the position a laser rangefinder direction relative to the camera. Data is captured by: displaying an image from the camera on the display with a marker, the marker and the determined laser rangefinder direction being aligned such that the apparatus is arranged to be pointed by a user towards a target by aligning the marker with the target; and capturing substantially simultaneously an image including the target using the camera and a range to the target using the laser rangefinder.

An alignment range may be captured using the laser rangefinder, substantially simultaneously with the one or more alignment images, the laser range finder direction being determined from the position and alignment range.

The rangefinder beam may be an infrared laser beam and the camera may be sensitive to visible and infrared light.

Detection of the rangefinder beam may be enhanced by reducing the amount of visible light entering the camera. The step of reducing the amount of visible light entering the camera may include temporarily positioning an infrared pass visible blocking filter in front of the camera.

Alternatively, a visible laser beam with a known relationship to the rangefinder beam may be projected, the step of determining from the image or images a position of the rangefinder beam in the image or images including determining the position of the visible laser beam and determining the position of the rangefinder beam based on the position of the visible laser beam and the known relationship.

Alternatively, the step of determining from the image or images a position of the rangefinder beam in the image or images may include subtracting a visible background to enhance detection of the infrared laser rangefinder beam. The background may be determined from a first image captured by the camera in the absence of the laser rangefinder beam.

Multiple pulses of the laser rangefinder beam may be detected per frame captured by the camera to enhance detection of the infrared laser rangefinder beam.

Alternatively, data may be accumulated over multiple camera frames to enhance detection of the infrared laser rangefinder beam.

Alternatively, a target may be provided, at least partly formed form a material that converts infrared light to visible light, at least one of the alignment images being captured with the laser rangefinder aligned with the target, and determining from the image or images a position of the rangefinder beam in the image or images includes detecting the visible light emitted by the target material.

The step of capturing substantially simultaneously one or more alignment images using the camera and an alignment range using the laser rangefinder may be performed in a darkened space.

The step of capturing substantially simultaneously one or more alignment images using the camera and an alignment range using the laser rangefinder may be performed two or more times at different ranges.

The marker and the determined laser rangefinder direction may be aligned by either: displaying a marker in alignment with the determined laser rangefinder direction whether or not that direction is offset from a display centre; or displaying a marker at the display centre and aligning a displayed image to bring the laser rangefinder direction to the display centre.

The rangefinder module or the portable device includes a positioning system and one or more orientation sensors, the step of capturing data including capturing a position of the rangefinder module or portable device using the positioning system and an orientation of the rangefinder module or portable device using the orientation sensors substantially simultaneously with capture of the image and range.
Before capturing data, the one or more orientation sensors may be aligned with the laser rangefinder direction.
This alignment may be performed by: capturing a first set of orientation parameters with the portable apparatus in a first position and a first orientation while aiming the portable apparatus at a second position; capturing a second set of orientation parameters with the portable apparatus in the first position and a second orientation while aiming the portable apparatus at the second position; capturing a third set of orientation parameters with the portable apparatus in the second position and the first orientation while aiming the portable apparatus at the first position; capturing a fourth set of orientation parameters with the portable apparatus in the second position and the second orientation while aiming the portable apparatus at the first position; and from the differences between the four sets of orientation parameters, determining one or more offsets for the one or more orientation sensors.
Captured data may be communicated from the rangefinder module to the portable device.

### BRIEF DESCRIPTION OF THE DRAWINGS

The accompanying drawings which are incorporated in and constitute part of the specification, illustrate embodiments of the invention and, together with the general description of the invention given above, and the detailed description of embodiments given below, serve to explain, by way of example only, the principles of the invention.
- **Figure 1**: is a schematic diagram of an instrument or apparatus according to one embodiment;
- **Figure 2**: is a further schematic view of the instrument or apparatus of Figure 1;
- **Figure 3**: is a flow chart illustrating a method according to one embodiment;
- **Figure 4**: is a flow chart showing in further detail the laser alignment step of Figure 3;
- **Figure 5**: is a flow chart showing in further detail the orientation sensor calibration step of Figure 3;
- **Figure 6**: is a flow chart showing in further detail the data capture step of Figure 3;
- **Figure 7**: shows a display of the instrument or apparatus in one embodiment;
- **Figure 8**: shows the display of the instrument or apparatus in another embodiment;
- **Figure 9**: shows an instrument or apparatus according to a further embodiment;
- **Figure 10**: shows the rangefinder module of the instrument or apparatus of Figure 9;
- **Figure 11**: shows the portable device of the instrument or apparatus of Figure 9;
- **Figure 12**: is a side view of the instrument or apparatus of Figure 9, showing the layout of some internal components of the rangefinder module; and
- **Figure 13**: is a back view of the instrument or apparatus of Figure 9, showing the layout of some internal components of the rangefinder module.

### DETAILED DESCRIPTION

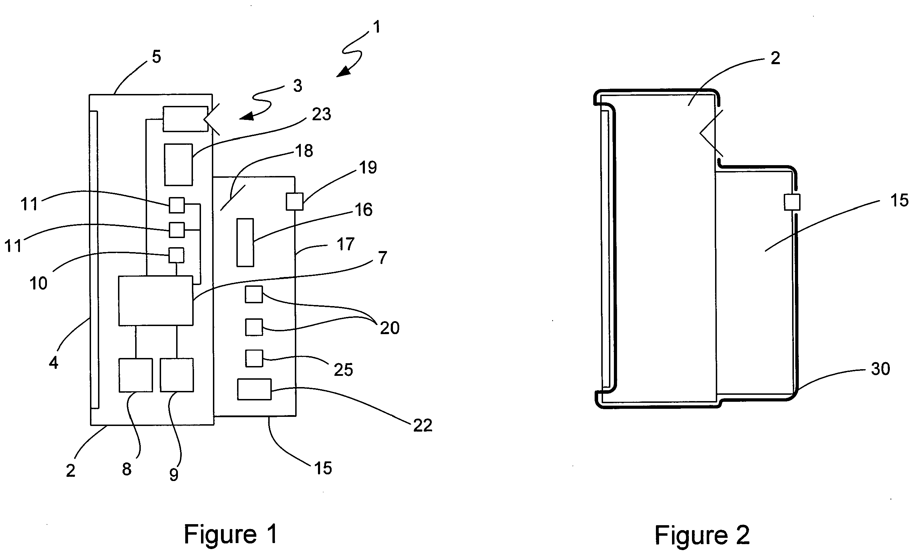

Figure 1 shows an instrument 1 according to one embodiment. The instrument 1 includes a portable device 2, which may be a smartphone, tablet or similar device. The portable device 2 may also be a portable GPS device. Such devices are available from suppliers such as Trimble, and may include a camera, display and GPS receiver.

The portable device is preferably a readily available item. The portable device 2 may include a camera 3 and a display 4 mounted in a housing 5. The portable device may also include a processor 7 and memory 8, and preferably includes one or more local communications modules 9, such as Bluetooth or USB communications modules. The portable device 2 may include other sensors, such as a positioning (e.g. GPS) module 10 and one or more orientation sensors 11. The orientation sensors 11 may include any suitable combination of direction-finding devices (e.g. magnetic or GPS compasses), tilt sensors and gyroscopes. The portable device preferably also includes a suitable user input arrangement, which may be a button, keypad, touchscreen, voice recognition, mouse or any other suitable input arrangement.

The instrument 1 also includes a rangefinder module 15. The rangefinder module 15 includes a laser rangefinder 16 mounted in a housing 17. In order to achieve a compact form, the rangefinder is oriented along the housing with one or more mirrors or similar reflectors 18 redirecting the rangefinder, such that laser light is emitted and received through window 19. In general the rangefinder will be aligned along a rangefinder axis that extends from the rangefinder to a target. The reflectors 18 substantially align the rangefinder axis with the camera optical axis, with further alignment achieved as discussed below.

This arrangement provides a thin or low profile rangefinder module that substantially retains the form factor of the portable device, such that the instrument 1 can be held in the same way. In one embodiment the rangefinder module 15 is less than 30mm, preferably less than 20mm in thickness.

In the embodiment shown the laser light is redirected through 90 degrees. However, in some embodiments a smaller or larger redirection may be required. For example, some handheld GPS units have their display and the larger part of their body oriented at about 20 to 30 degrees to the camera optical axis. If the Applicant's laser rangefinder module is arranged with its housing substantially parallel to the GPS unit display, then the optical axis need be redirected only by 20 to 30 degrees.

Although a mirror or other reflector 18 is shown in the drawings, any other suitable optical element may be used to redirect the laser rangefinder path. For example, where only a small redirection is required a prism may be used. Where reflectors are used these may be mirrors or right angle prisms or any other suitable reflector.

The laser rangefinder will generally include a laser configured to emit an infrared laser beam (usually around 905nm, although any suitable wavelength may be used) and a camera to detect the reflected laser beam. The time of flight of a laser pulse, or the phase of a modulated signal on the laser, is detected and used to determine a range.

The rangefinder module 15 may include other sensors 20, which may include positioning and orientation sensors. The rangefinder module preferably has a battery 22 to reduce the load on the portable device battery 23, as the rangefinder and other sensors in the rangefinder module will consume substantial energy. The rangefinder module may have a suitable port for connection of a battery charger, or the rangefinder module may draw power from a connection to the portable device.

The rangefinder module also includes a communications module 25 (such as a Bluetooth or USB module) for communicating over a communications link with the communications module 9 of the portable device 2.

In general the rangefinder module 15 may provide any desired set of sensors to augment the sensors provided by the portable device 2. Even if the portable device includes a particular sensor, a further or more accurate sensor of the same kind may be provided in the rangefinder module.

As shown in Figure 2, the rangefinder module 15 may be mounted to the portable device 2 using a suitable case 30, for example a clamshell-type or elastic case. Preferably the case mounts the rangefinder module to the portable device with sufficient rigidity to prevent unwanted movement between the two. Any suitable joining mechanism that achieves this purpose may be used in place of the case. The case may be specific to the type of portable device used. The part of the case that fits to the rangefinder module may be standard with different interfaces for different portable devices.

Thus the rangefinder module 15 can be mounted in fixed relation to the portable device 2. However, this does not provide an accurate alignment of the laser rangefinder 16 and the camera 3. The rangefinder module may be manufactured to provide approximate alignment to the camera 3 of a particular type of portable device. However, manufacturing tolerances and variations in the devices and mounting arrangements will result in variations in alignment.

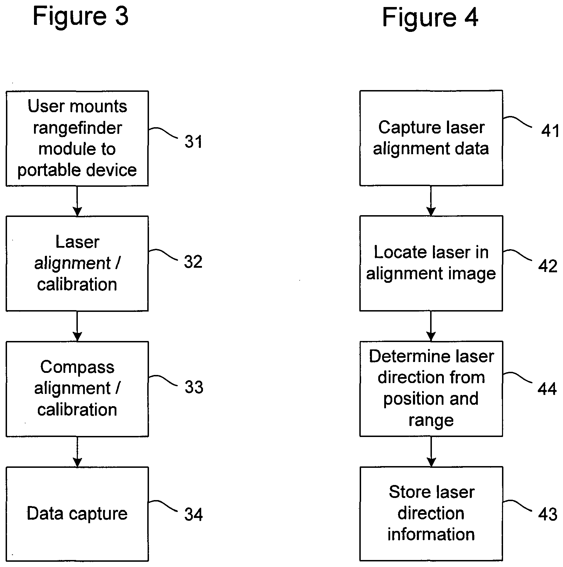

Figure 3 is a flow diagram showing how the Applicant's instrument 1 is configured for user alignment and calibration. At step 31a user mounts the rangefinder module 15 to the portable device 2. At step 32, a laser alignment process is implemented, as shown in more detail in figure 4. At step 41 the instrument captures one or more alignment images using the camera 3. For the most accurate alignment the instrument may be directed at a relatively flat surface during this step. In at least some of these images the laser rangefinder is on, with the laser beam preferably emitting multiple pulses per image. The position of the laser rangefinder in the alignment images may then be determined at step 42.

The cameras in most Smartphones and other consumer electronics devices have sensors that are sensitive over the visible spectrum and into the infrared. However, in order to improve their performance in the visible range, an infrared blocking filter is usually added during manufacture. The camera generally remains slightly sensitive in the infrared, so the resulting alignment images will be formed by visible light and infrared light (including the laser rangefinder beam). As the sensitivity in the infrared is low due to the infrared blocking filter, it may be desirable to enhance detection of the infrared light. This can be achieved in several different ways.

If one colour channel of the sensor is more sensitive in the infrared than other channels, it alone may be used for detection of the infrared laser beam.

The level of visible light reaching the sensor may be reduced, which will result in the infrared forming a greater proportion of detected light. For example, the user could capture the alignment images in a darkened space, such as a room with the lights off. Alternatively, a visible blocking infrared pass filter could be used. A suitable filter could be stored in the device housing and could be a "pop-up" retractable filter.

Alternatively, a frequency conversion material may be used. Laser detection phosphors, or other suitable materials, absorb infrared light and emit visible light. If the laser rangefinder is directed at such a material, the visible light emitted by that material can be detected and used to determine the infrared beam position. A suitable material may be provided as part of the device packaging, or may be provided on a small card stored in the device housing.

Alternatively, multiple (possible a hundred or more) frames may be captured, with the small infrared signal being accumulated over those multiple frames and the infrared signal improved by way of video averaging. Overlaying and adding video frames causes the random noise components to cancel, while a constant signal (the IR light) will tend to be additive, hence pulling the signal out of the noise. The optimum number of frames to average over will depend on the brightness contrast of the laser spot with the background light. An optical system with a high level of IR cut filtering will need more averaging.

As yet another alternative a background frame may be captured with no laser beam (i.e. with the rangefinder off) and this background data can be subtracted from an alignment image with the laser beam on. In this way much of the visible light data will be eliminated.

Yet a further alternative involves the use of a visible light laser. A visible alignment laser is provided in the rangefinder module aligned with, or with a known alignment to, the rangefinder laser. The alignment images are captured using this alignment laser and the position of the rangefinder laser can be determined from the position of the alignment laser in the alignment images.

In any case, one or more alignment images may be captured using the camera 3, and from those image(s) the position of the laser rangefinder beam in the image(s) can be determined, optionally using one of the enhancement techniques described above.

Substantially simultaneously with capture of the alignment image(s), an alignment range is captured using the laser rangefinder. This may be done within a short time period of the alignment image(s) being captured. However, if the time period is too long there may be some appreciable movement of the device, which will reduce the accuracy of the alignment process. Preferably the alignment image(s) and alignment range are captured over a period of time less than 0.5 second, preferably less than 0.1 seconds. However, in other embodiments the device may be mounted on a rigid support, eliminating the possibility of movement and allowing longer time periods to be used.

From the position of the laser rangefinder beam in the alignment image(s) and the known distance to whatever object the laser rangefinder is aimed at, a direction or offset of the rangefinder beam relative to the camera 3 can be determined at step 43.

This is determined from a simple relationship between the position of the beam on the sensor and the range. A pixel on the sensor corresponds to a line extending from that pixel through the optical centre (or rather to a solid angle since the pixel has some area). The range allows a point on that line to be identified. The laser rangefinder direction extends from the rangefinder laser through that point.

A less accurate determination of rangefinder direction can be determined based on the position of the beam on the sensor without the range information. If it is assumed that the rangefinder and camera are at the same point then the position of the beam on the sensor relates to a line, which is the rangefinder direction. However, the loss of accuracy from that assumption makes this method less desirable.

The distance between the camera optical axis and the laser rangefinder may also be taken into account. This distance is known as a parameter of the mounting arrangement and the physical configuration of the portable device and rangefinder module. This information can be used to ensure that the marker displayed on the display 4 (as discussed below) corresponds to the laser rangefinder direction (i.e. is parallel to the laser rangefinder direction).

Alignment images may be captured at a single distance from the alignment target, or two or more sets of images may be captured at different distances from the target to improve the alignment accuracy. Where two or more images are captured at different distances, the distance between the camera optical axis and rangefinder need not be known. The distance between the camera optical axis and rangefinder can be determined from the two sets of alignment images if needed.

In addition, further improvements in accuracy may be achieved as follows. Many portable devices include auto-focussing cameras. As the focussing distance of the camera changes, the field of view of the camera also changes. This means that the solid angle defined by each pixel changes with focussing distance. This effect may lead to inaccuracies in the alignment process. In one embodiment, the camera may therefore be forced to a known focus point such that the alignment procedure can be carried out based on known pixel parameters. For example, the camera may be forced to the hyperfocal distance, or to focus at infinity. In either case, the pixel solid angle will be known and can be used in accurate alignment by the processes described above. The camera can be forced to focus as required using a software step appropriate to the particular portable device 2.

At step 44 the laser rangefinder direction information is stored in memory in either or both of the portable device 2 and rangefinder module 15. The information can be used to adjust the display as follows.

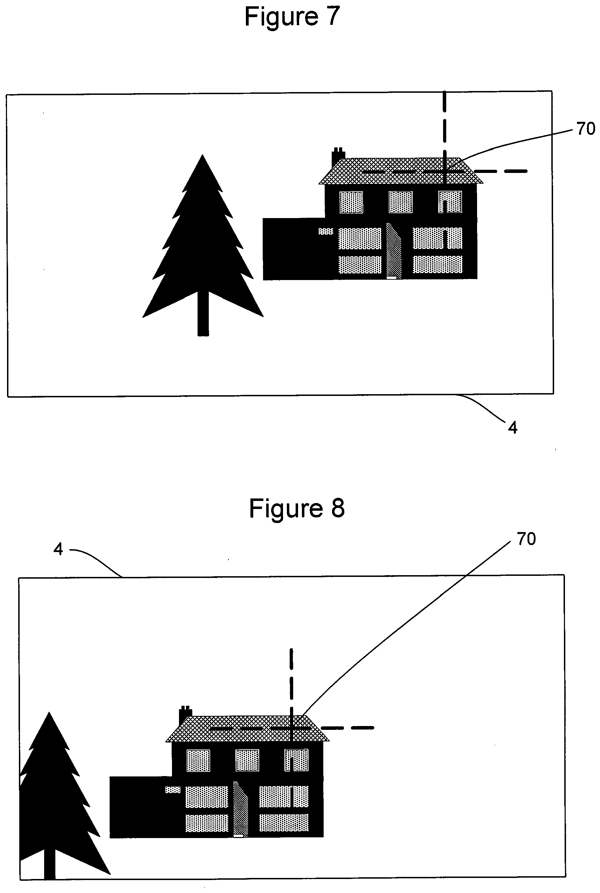

Figure 7 shows the display 4 displaying an image from the camera 3 to a user. The display 4 includes an overlaid marker 70, which is displayed to align with the laser rangefinder direction determined above. The marker can be a cross-hair or any other suitable marker. Thus, the user can use the marker to align the laser rangefinder with a target. When the user provides a capture command, the instrument will capture an image using the camera 3 and a range to the target using the laser rangefinder 16.

Figure 8 shows an alternative arrangement, in which the marker 70 is overlaid at the centre of the display 4. The image has been moved such that the laser rangefinder direction is aligned with the marker 70. This requires a sample from the camera field of view to be displayed so the image can be shifted.

Thus, the Applicant's invention allows intuitive and accurate aiming of the laser range finder, using the camera and display of the portable device 2.

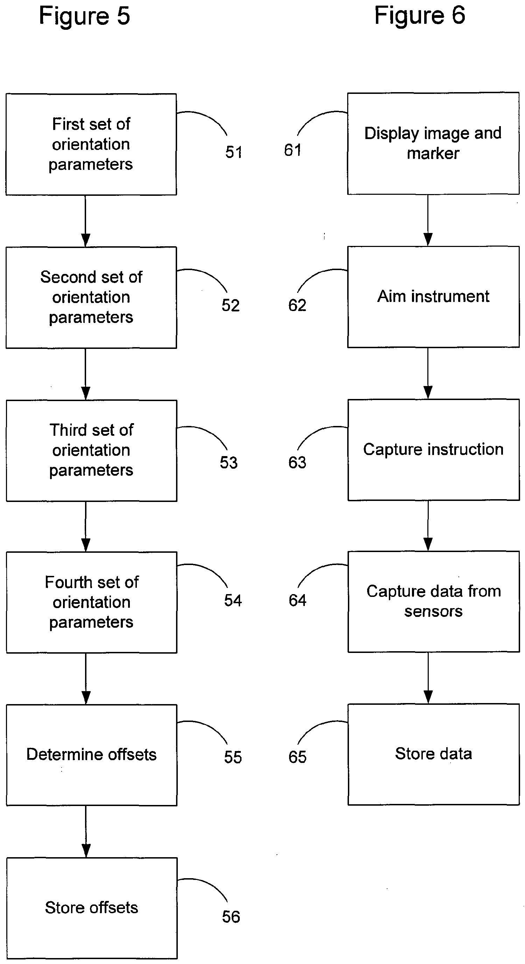

Returning to Figure 3, a compass calibration or alignment process may be implemented at step 33. This process is shown in detail in Figure 5. The goal is to align the compass, or any combination of orientation sensors, with the laser rangefinder direction. The orientation sensors may be provided in the portable device 2, or may be in the rangefinder module 15. In either case, the presence or operation of the other device or module may create magnetic fields that will create inaccuracy in the operation of the orientation sensors. In order to limit this effect, the orientation sensors are preferably operated while other sensors (e.g. the rangefinder, camera etc) are dormant and in the absence of high current events such as battery charging or operation of the camera flash. Substantially simultaneous data capture from all sensors can still be achieved by a suitable switching arrangement, such as described in the Applicant's US Patent No. 7,647, 197. In addition, a calibration routine may be performed as follows. At step 51 the user positions the portable instrument, including the portable device and the rangefinder module, in a first position and with a first (e.g. vertical) orientation. The first position may be defined by the top of a fixed wooden post or any other available preferably non-magnetic structure. For accurate calibration these measurement should be done in a constant magnetic field, for example in an open space such as a park or field, rather than in a building, or near metal materials. Using the display and marker 70, the user aims the instrument at a second position, which may be defined by some other such structure a suitable distance away (e.g. around 10 to 20 yards). The first and second positions should preferably be around the same height. The user provides a "capture" instruction, for example by pressing a button on the instrument. This causes a first set of orientation parameters to be captured, including a compass reading and pitch.
At step 52 the user positions the portable instrument in the first position but with a second (e.g. horizontal) orientation. The user again aims the instrument at a second position and provides a "capture" instruction, causing a second set of orientation parameters to be captured, including a compass reading and pitch.
At step 53 the user positions the portable instrument in the second position and with the first orientation. The user aims the instrument at the first position and provides a "capture" instruction, causing a third set of orientation parameters to be captured, including a compass reading, pitch and roll.

At step 54 the user positions the portable instrument in the second position and with the second orientation. The user aims the instrument at the first position and provides a "capture" instruction, causing a fourth set of orientation parameters to be captured, including a compass reading, pitch and roll.

These four sets of orientation parameters provide information on the orientation sensors, including compass and tilt sensors. By examining the differences in sensor readings between the four sets of parameters, it is possible to determine offsets for each orientation sensor at step 55. The difference in the bearings, less 180 degrees is the angular offset between the rangefinder direction and compass reading. In the absence of other errors, this should be the same for horizontal and vertical orientations. The pitch for each reading should be zero (level), so any offset in pitch can be used to offset the inclinometers.

Some smartphones change their sense orientation depending on whether they are held in the vertical or horizontal and this will need to be taken into account in the calibration routine.

Other compass calibration routines may occur to the skilled reader. Any suitable compass calibration routine may be used.

At step 56 the offsets are stored in memory, in either the portable device 2 or rangefinder module 15.

The orientation sensors, rangefinder and marker are now all aligned.

In order to improve the compass performance, gyroscopes and/or accelerometers can be monitored and their data used to cross-check against movements in the orientation sensor outputs. Also, as position information is also being gathered, the orientation data can be cross-checked against a model of the Earth's magnetic field. In any case, if there is an unexpected deviation in the data from the orientations sensors, a user warning can be displayed and/or an error indication can be saved within any data gathered.

The instrument is now ready to capture accurate data. The data capture process is step 34 of Figure 3 and is shown in more detail in Figure 6. At step 61 the instrument displays an image from the camera 3 on the display 4, with the marker 70 overlaid as discussed above. At step 62 the user aims the instrument such that the marker 70 is aligned with a target and at step 63 the user issues a capture instruction. This causes, at step 64, data to be captured from the sensors. Any data captured in the rangefinder module may be communicated over the communications link to the portable device. This data may include: an image from the camera 3, a position from the positioning system 10, a range from the rangefinder 16, and orientation from the orientation sensors 11. The position, range and orientation data allows the position of the target to be accurately determined. The position of the instrument is known, as is the range and direction to the target, so the target position can be calculated. At step 65, the data is stored, preferably associated as a single set of associated data, including any desired metadata, as discussed in the Applicant's US Patent No. 7,647,197.

The Instrument is preferably arranged to guide the user through the steps of Figures 4, 5 and 6. Suitable instructions may be displayed on the display 4 of the portable device 2. For example, at step 41 of the laser alignment process, the display may display user instructions: "Laser alignment: Aim at target and press capture button." Similar instructions may be displayed at other stages of the alignment, calibration and data capture procedures.

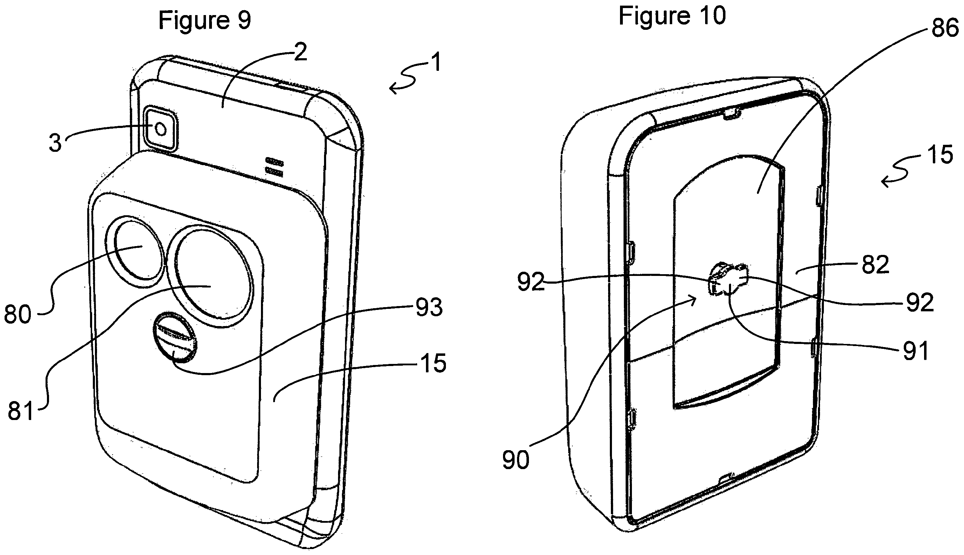

Figures 9 to 13 show another embodiment. The instrument or apparatus 1 includes a portable device 2 and a rangefinder module 15. In this case, the portable device 2 is a Smartphone with a camera 3. The rangefinder module 15 has two windows 80, 81. The rangefinder beam is emitted through the first window 80 and the laser signal reflected or scattered from the target is received through the second window 81.

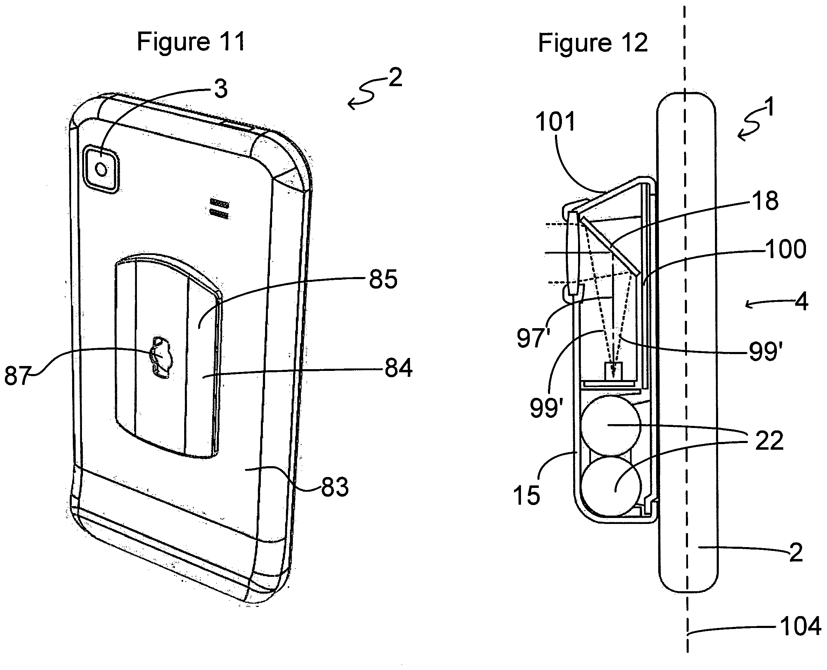

Figure 10 shows the rangefinder module 15 and Figure 11 shows the portable device 2. The back face 82 of the rangefinder module 15 will sit against the back face 83 of the portable device 2 in the assembled apparatus or instrument 1. As shown in Figure 11, a mounting bracket 84 may be attached to the portable device 2. The mounting bracket 84 may be attached using an adhesive. Alternatively the mounting bracket may be shaped to fit with a particular feature of the portable device. For example, in one embodiment the mounting bracket may be shaped such that it can be attached to the portable device in place of a battery compartment cover. The mounting bracket may be shaped to cooperate with any suitable physical element of a particular portable device.

The mounting bracket 84 may include a plate 85. The rangefinder module includes a recess 86 with a shape that cooperates with the plate 85 to align the rangefinder module 15 in a desired position on the portable device 2. More generally, any arrangement of cooperating protrusions and recesses may be used to align the rangefinder module 15 in a desired position on the portable device 2.

In a preferred embodiment the cooperating protrusions and recesses align the rangefinder module and portable device in a sufficiently accurate manner that, following alignment procedures such as those described above, the rangefinder module can be removed from the portable device and reattached with no realignment process necessary.

The mounting bracket 84 may also include a locking formation 87, which may be a shaped recess. In the embodiment of Figure 11 the locking formation 87 is a shaped recess with a central aperture and a pair of lobes extending from the central aperture. This shape cooperates with a locking mechanism 90 on the rangefinder module 15. The locking mechanism 90 includes a central shaft 91 with a pair of lugs 92 extending from the shaft 91. The locking mechanism can be rotated between a locked position as shown in Figure 10, where the lugs extend horizontally, and an unlocked position where the lugs extend vertically.

The locking mechanism may include a locking actuator 93 (Figure 9) that allows a user to rotate the shaft 91 when the rangefinder module is positioned on the portable device 2. Thus a user can position the rangefinder module on the portable device with the locking mechanism in an unlocked position and then turn the locking mechanism into the locked position. In the embodiment shown the locking actuator is in the form of a slotted screw-like arrangement that can be turned using a small coin or the like. However, various arrangements may be used including any suitable small latch, lever, knob or the like.

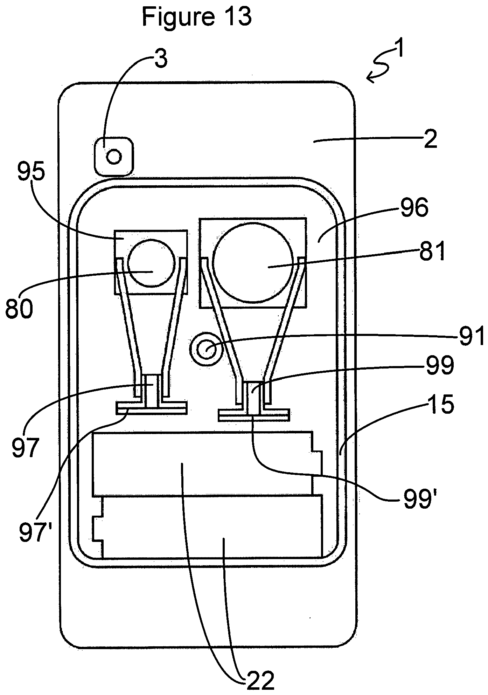

As shown in Figures 12 and 13, the rangefinder module 15 includes batteries 22, which may be standard AAA or AA batteries. The rangefinder module includes a reflector arrangement 18, which is formed by two reflectors 95, 96. The rangefinder module includes a laser emitter 97 which projects a laser beam towards the first reflector 95 where the beam is redirected to exit the rangefinder module via the first window 80.

The rangefinder module also includes a laser receiver 99, which measures laser light that is reflected or scattered from a target, received through the second window 81 and redirected by reflector 96 towards the laser receiver 99.

The use of two reflectors 95, 95, one for each of the transmitter and receiver, helps to provide optical isolation of the receiver and transmitter, i.e. to limit the detection of stray signals transmitted to the receiver by an incorrect optical path.

Figure 12 shows in dashed line the optical path 97' for the laser emitter 97. It also shows the optical path 99' for the laser receiver 99 (marked by two lines 99' indicating its width). The laser paths are redirected by the reflector arrangement 18 to be substantially aligned with the optical axis of the camera 3, with more accurate alignment achieved by the mechanisms discussed above.

The laser emitter 97 and laser receiver 99 may be mounted on laser emitter printed circuit board 97' and laser receiver printed circuit board 99' respectively (Figure 13).

The rangefinder module 15 may also include a main printed circuit board 100 (Figure 12) which is configured with one or more processors, memory etc as required to control operation of the rangefinder module.

The Applicant's rangefinder module preferably positions the reflectors 95, 96 close to the camera optical axis, in order to align the apparent rangefinder source with the camera optical axis as far as possible, but does not intrude significantly into the camera field of view. This is possible due to the low profile, generally flat shape of the rangefinder module. A module of a different shape could intrude into the camera field of view, or intrude to a greater extent.

As can be seen most clearly in Figure 12, a top surface 101 of the rangefinder module may be angled away from the optical axis of the camera, to limit its intrusion into the camera field of view. In the embodiment of Figures 9 to 13, the portable device is generally flat-bodied (as are most current Smartphones). A flat-bodied device lies substantially in a plane (indicated by dashed line 104 in Figure 12). In the device shown in Figure 12 the laser rangefinder may be positioned within the laser rangefinder module such that the laser beam, before being redirected, is emitted in a plane that is substantially parallel to the plane 104 of the generally flat-bodied portable device.

In the embodiment of Figures 9 to 13 the rangefinder module 15 simply includes the components required for laser rangefinding. The portable device 2 in this embodiment includes a GPS and orientation sensors. However, in modifications of this embodiment the rangefinder module 15 may include further sensors, such as GPS and orientation sensors. In general any arrangement discussed above may used in a modification of this embodiment.

The laser emitter may be a commercially available photodiode laser mounted to a suitable printed circuit board (PCB). The laser receiver may be a commercially available avalanche photodiode (APD) receiver, mounted to a suitable PCB.

The Applicant's rangefinder module is readily mounted to a standard consumer electronics device, such as a Smartphone (e.g. iPhone, Blackberry etc) or any suitable device having a camera, including portable GPS units or the like. This results in reduced cost over a dedicated instrument because many users will already have such devices, or many users will be able to justify the cost of such a device for the other functions it provides.

However, the Applicant's rangefinder module is by no means simply an add-on to an existing device. Effective integration of the rangefinder module and portable device is achieved through an effective mounting arrangement and excellent alignment and calibration procedures. This allows the instrument to provide highly accurate data in an accessible and cost-effective manner. The instrument is capable of providing an image of a target, together with an accurate position of the target. The data can preferably be captured from a remote position (e.g. up to 1000 metres, or around 1100 yards, from the target).

The instrument including the portable device and rangefinder module is handheld and portable. It can therefore be conveniently carried and used.

Computer instructions for instructing the portable device and/or the rangefinder module to perform the above methods may be stored on any suitable computer-readable medium, including hard-drives, flash memory, optical memory devices, compact discs or any other suitable medium.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and methods, and illustrative examples shown and described. Accordingly, departures may be made from such details without departure from the scope of the appended claims.

## Claims

1. A data capture method including:
a) mounting a rangefinder module (15) to a portable device (2), the rangefinder module (15) including a laser rangefinder (16) emitting and detecting a rangefinder beam, the laser rangefinder being aligned along a rangefinder direction; wherein the portable device (2) includes a camera (3) and a display (4), the camera has an optical axis, and the rangefinder module or the portable device (2) includes a positioning system (10, 20) and one or more orientation sensors (11, 20), wherein, in a mounted state, the laser rangefinder (16) and camera (3) are in fixed relation to each other with the rangefinder direction and optical axis substantially aligned; wherein the method further comprises the steps of:
b) performing an alignment including determining the laser rangefinder direction by:
i. capturing one or more alignment images using the camera (3);
ii. determining from the image or images a position of the rangefinder beam in the image or images; and
iii. determining from the position the laser rangefinder direction relative to the camera (3); and
c) capturing data by:
i. displaying an image from the camera (3) on the display (4) with a marker, the marker and the determined laser rangefinder direction being aligned such that the apparatus is arranged to be pointed by a user towards a target by aligning the marker with the target; and
ii. capturing substantially simultaneously an image including the target using the camera (3) and a range to the target using the laser rangefinder (16); and
iii. capturing a position of the rangefinder module (15) or portable device (2) using the positioning system and an orientation of the rangefinder module (15) or portable device using the orientation sensors substantially simultaneously with capture of the image and range.

2. A method as claimed in claim 1 including capturing an alignment range using the laser rangefinder (16), substantially simultaneously with the one or more alignment images, the laser range finder direction being determined from the position and alignment range.

3. A method as claimed in claim 1 wherein the rangefinder beam is an infrared laser beam and the camera (3) is sensitive to visible and infrared light.

4. A method as claimed in claim 3, including enhancing detection of the rangefinder beam by reducing the amount of visible light entering the camera (3).

5. A method as claimed in claim 3 including projecting a visible laser beam with a known relationship to the rangefinder beam, the step of determining from the image or images a position of the rangefinder beam in the image or images including determining the position of the visible laser beam and determining the position of the rangefinder beam based on the position of the visible laser beam and the known relationship.

6. A method as claimed in claim 3, the step of determining from the image or images a position of the rangefinder beam in the image or images including subtracting a visible background to enhance detection of the infrared laser rangefinder beam.

7. A method as claimed in claim 3, including detecting multiple pulses of the laser rangefinder beam per frame captured by the camera (3) to enhance detection of the infrared laser rangefinder beam.

8. A method as claimed in claim 3, including accumulating data over multiple camera frames to enhance detection of the infrared laser rangefinder beam.

9. A method as claimed in claim 3, including providing a target at least partly formed from a material that converts infrared light to visible light, at least one of the alignment images being captured with the laser rangefinder aligned with the target, and determining from the image or images a position of the rangefinder beam in the image or images includes detecting the visible light emitted by the target material.

10. A method as claimed in claim 1, including performing the step of capturing substantially simultaneously one or more alignment images using the camera (3) and an alignment range using the laser rangefinder (16) in a darkened space.

11. A method as claimed in claim 1, including performing the step of capturing substantially simultaneously one or more alignment images using the camera (3) and an alignment range using the laser rangefinder (16) two or more times at different ranges.

12. A method as claimed in claim 1 the marker and the determined laser rangefinder direction being aligned by either: displaying a marker in alignment with the determined laser rangefinder direction whether or not that direction is offset from a display centre; or displaying a marker at the display centre and aligning a displayed image to bring the laser rangefinder direction to the display centre.

13. A method as claimed in claim 1 including, before capturing data, aligning the one or more orientation sensors with the laser rangefinder direction.

14. A method as claimed in claim 1, including communicating captured data from the rangefinder module (15) to the portable device (2).

## Patentansprüche

1. Datenerfassungsverfahren, aufweisend:
a) Befestigen eines Entfernungsmesser-Moduls (15) an einer tragbaren Vorrichtung (2), wobei das Entfernungsmesser-Modul (15) einen Laser-Entfernungsmesser (16) aufweist, der einen Entfernungsmesser-Strahl abgibt und detektiert, wobei der Laser-Entfernungsmesser entlang einer Entfernungsmesser-Richtung ausgerichtet ist;
wobei die tragbare Vorrichtung (2) eine Kamera (3) und eine Anzeige (4) aufweist, wobei die Kamera eine optische Achse hat, und das Entfernungsmesser-Modul oder die tragbare Vorrichtung (2) ein Positioniersystem (10, 20) und einen oder mehrere Orientierungssensoren (11, 20) aufweist, wobei sich der Laser-Entfernungsmesser (16) und die Kamera (3) im befestigten Zustand in einer feststehenden Beziehung zueinander befinden, in der die Entfernungsmesser-Richtung und die optische Achse im Wesentlichen miteinander ausgerichtet sind;
wobei das Verfahren weiterhin die folgenden Schritte umfasst:
b) Durchführen einer Ausrichtung aufweisend Ermitteln der Richtung des Laser-Entfernungsmessers durch:
i. Erfassen eines oder mehrerer Ausrichtungsbilder mittels der Kamera (3);
ii. Ermitteln, anhand des Bilds oder der Bilder, einer Position des Entfernungsmesser-Strahls im Bild oder in den Bildern; und
iii. Ermitteln, anhand der Position, der Richtung des Laser-Entfernungsmessers in Bezug auf die Kamera (3); und
c) Erfassen von Daten durch:
i. Anzeigen eines Bilds von der Kamera (3) auf der Anzeige (4) mit einem Marker, wobei der Marker und die ermittelte Richtung des Laser-Entfernungsmessers derart ausgerichtet sind, dass das Gerät dafür angeordnet ist, von einem Benutzer auf ein Ziel hin gerichtet zu werden, indem der Marker mit dem Ziel ausgerichtet wird; und
ii. im Wesentlichen gleichzeitiges Erfassen eines Bilds, das das Ziel aufweist, mittels der Kamera (3) und einer Entfernung zum Ziel mittels des Laser-Entfernungsmessers (16); und
iii. Erfassen einer Position des Entfernungsmesser-Moduls (15) oder der tragbaren Vorrichtung (2) mittels des Positioniersystems und einer Orientierung des Entfernungsmesser-Moduls (15) oder der tragbaren Vorrichtung mittels der Orientierungssensoren, im Wesentlichen gleichzeitig mit der Erfassung des Bilds und der Entfernung.

2. Verfahren nach Anspruch 1, aufweisend Erfassen eines Ausrichtungsbereichs mittels des Laser-Entfernungsmessers (16), im Wesentlichen gleichzeitig mit dem einen oder den mehreren Ausrichtungsbildern, wobei die Richtung des Laser-Entfernungsmessers aus der Position und dem Ausrichtungsbereich ermittelt wird.

3. Verfahren nach Anspruch 1, wobei der Entfernungsmesser-Strahl ein Infrarot-Laserstrahl ist und die Kamera (3) für sichtbares und Infrarot-Licht empfänglich ist.

4. Verfahren nach Anspruch 3, aufweisend Verbessern der Detektion des Entfernungsmesser-Strahls durch Verringern der Menge des sichtbaren Lichts, die in die Kamera (3) eintritt.

5. Verfahren nach Anspruch 3, aufweisend Projizieren eines sichtbaren Laserstrahls mit einer bekannten Beziehung zum Entfernungsmesser-Strahl, wobei der Schritt des Ermittelns, anhand des Bilds oder der Bilder, einer Position des Entfernungsmesser-Strahls im Bild oder in den Bildern das Ermitteln der Position des sichtbaren Laserstrahls und das Ermitteln der Position des Entfernungsmesser-Strahls auf der Grundlage der Position des sichtbaren Laserstrahls und der bekannten Beziehung aufweist.

6. Verfahren nach Anspruch 3, wobei der Schritt des Ermittelns, anhand des Bilds oder der Bilder, einer Position des Entfernungsmesser-Strahls im Bild oder in den Bildern das Subtrahieren eines sichtbaren Hintergrunds aufweist, um die Detektion des Infrarot-Laser-Entfernungsmesser-Strahls zu verbessern.

7. Verfahren nach Anspruch 3, aufweisend Detektieren mehrerer Impulse des Laser-Entfernungsmesser-Strahls pro von der Kamera (3) erfasstem Einzelbild, um die Detektion des Infrarot-Laser-Entfernungsmesser-Strahls zu verbessern.

8. Verfahren nach Anspruch 3, aufweisend Sammeln von Daten über mehrere Einzelbilder der Kamera, um die Detektion des Infrarot-Laser-Entfernungsmesser-Strahls zu verbessern.

9. Verfahren nach Anspruch 3, aufweisend Bereitstellen eines Ziels, das zumindest teilweise aus einem Material gebildet ist, das Infrarot-Licht in sichtbares Licht umwandelt, wobei zumindest eines der Ausrichtungsbilder mit dem Laser-Entfernungsmesser erfasst wird, wenn er mit dem Ziel ausgerichtet ist, und wobei das Ermitteln, anhand des Bilds oder der Bilder, einer Position des Entfernungsmesser-Strahls im Bild oder in den Bildern das Detektieren des sichtbaren Lichts aufweist, das vom Zielmaterial abgegeben wird.

10. Verfahren nach Anspruch 1, aufweisend Durchführen des Schritts des im Wesentlichen gleichzeitigen Erfassens eines oder mehrerer Ausrichtungsbilder mittels der Kamera (3) und eines Ausrichtungsbereichs mittels des Laser-Entfernungsmessers (16) in einem verdunkelten Raum.

11. Verfahren nach Anspruch 1, aufweisend Durchführen des Schritts des im Wesentlichen gleichzeitigen Erfassens eines oder mehrerer Ausrichtungsbilder mittels der Kamera (3) und eines Ausrichtungsbereichs mittels des Laser-Entfernungsmessers (16) zweimal oder öfter in unterschiedlichen Bereichen.

12. Verfahren nach Anspruch 1, wobei der Marker und die ermittelte Richtung des Laser-Entfernungsmessers durch eines von Folgendem ausgerichtet werden: Anzeigen eines Markers in Ausrichtung mit der ermittelten Richtung des Laser-Entfernungsmessers, unabhängig davon ob diese Richtung von einem Anzeigemittelpunkt versetzt ist; oder Anzeigen eines Markers im Anzeigemittelpunkt und Ausrichten eines angezeigten Bilds, um die Richtung des Laser-Entfernungsmessers zum Anzeigemittelpunkt zu bringen.

13. Verfahren nach Anspruch 1, aufweisend Ausrichten des einen oder der mehreren Orientierungssensoren mit der Richtung des Laser-Entfernungsmessers vor dem Erfassen von Daten.

14. Verfahren nach Anspruch 1, aufweisend Übermitteln erfasster Daten vom Entfernungsmesser-Modul (15) zur tragbaren Vorrichtung (2).

## Revendications

1. Procédé de capture de données incluant :
a) le montage d'un module télémètre (15) sur un dispositif portable (2), le module télémètre (15) incluant un télémètre à laser (16) émettant et détectant un faisceau télémétrique, le télémètre à laser étant aligné le long d'une direction télémétrique ;
dans lequel le dispositif portable (2) inclut un appareil de prise de vues (3) et un écran (4), l'appareil de prise de vues présente un axe optique, et le module télémètre ou le dispositif portable (2) inclut un système de positionnement (10, 20) et un ou plusieurs capteurs d'orientation (11, 20), dans lequel, dans un état monté, le télémètre à laser (16) et l'appareil de prise de vues (3) sont en relation fixe l'un avec l'autre, la direction télémétrique et l'axe optique étant sensiblement alignés ;
dans lequel le procédé comprend en outre les étapes consistant à :
b) effectuer un alignement incluant la détermination de la direction de télémètre à laser en :
i. capturant une ou plusieurs images d'alignement en utilisant l'appareil de prise de vues (3) ;
ii. déterminant à partir de l'image ou des images une position du faisceau télémétrique dans l'image ou les images ; et
iii. déterminant à partir de la position la direction de télémètre à laser relativement à l'appareil de prise de vues (3) ; et
c) capturer des données en :
i. affichant une image issue de l'appareil de prise de vues (3) sur l'écran (4) avec un repère, le repère et la direction de télémètre à laser déterminée étant alignés de sorte que l'appareil est agencé pour être pointé par un utilisateur vers une cible en alignant le repère avec la cible ; et
ii. capturant sensiblement simultanément une image incluant la cible en utilisant l'appareil de prise de vues (3) et une distance jusqu'à la cible en utilisant le télémètre à laser (16) ; et
iii. capturant une position du module télémètre (15) ou du dispositif portable (2) en utilisant le système de positionnement et une orientation du module télémètre (15) ou du dispositif portable en utilisant les capteurs d'orientation sensiblement simultanément avec la capture de l'image et de la distance.

2. Procédé selon la revendication 1 incluant la capture d'une distance d'alignement en utilisant le télémètre à laser (16), sensiblement simultanément avec la ou les plusieurs image(s) d'alignement, la direction de télémètre à laser étant déterminée à partir de la position et de la distance d'alignement.

3. Procédé selon la revendication 1 dans lequel le faisceau télémétrique est un faisceau laser infrarouge et l'appareil de prise de vues (3) est sensible à la lumière visible et infrarouge.

4. Procédé selon la revendication 3, incluant l'amélioration de la détection du faisceau télémétrique en réduisant la quantité de lumière visible entrant dans l'appareil de prise de vues (3).

5. Procédé selon la revendication 3 incluant la projection d'un faisceau laser visible dans une relation connue avec le faisceau télémétrique, l'étape consistant à déterminer à partir de l'image ou des images une position du faisceau télémétrique dans l'image ou les images incluant la détermination de la position du faisceau laser visible et la détermination de la position du faisceau télémétrique sur la base de la position du faisceau laser visible et de la relation connue.

6. Procédé selon la revendication 3, l'étape consistant à déterminer à partir de l'image ou des images une position du faisceau télémétrique dans l'image ou les images incluant la soustraction d'un arrière-plan visible pour améliorer la détection du faisceau télémétrique laser infrarouge.

7. Procédé selon la revendication 3, incluant la détection de multiples impulsions du faisceau télémétrique laser par trame capturée par l'appareil de prise de vues (3) pour améliorer la détection du faisceau télémétrique laser infrarouge.

8. Procédé selon la revendication 3, incluant l'accumulation de données sur de multiples trames d'appareil de prise de vues pour améliorer la détection du faisceau télémétrique laser infrarouge.

9. Procédé selon la revendication 3, incluant la fourniture d'une cible au moins partiellement formée à partir d'un matériau qui transforme la lumière infrarouge en lumière visible, au moins une des images d'alignement étant capturée avec le télémètre à laser aligné sur la cible, et la détermination à partir de l'image ou des images d'une position du faisceau télémétrique dans l'image ou les images inclut la détection de la lumière visible émise par le matériau cible.

10. Procédé selon la revendication 1, incluant l'exécution de l'étape consistant à capturer sensiblement simultanément une ou plusieurs images d'alignement en utilisant l'appareil de prise de vues (3) et une distance d'alignement en utilisant le télémètre à laser (16) dans un espace obscurci.

11. Procédé selon la revendication 1, incluant l'exécution de l'étape consistant à capturer sensiblement simultanément une ou plusieurs images d'alignement en utilisant l'appareil de prise de vues (3) et une distance d'alignement en utilisant le télémètre à laser (16) deux fois ou plus à différentes distances.

12. Procédé selon la revendication 1, le repère et la direction de télémètre à laser déterminée étant alignés soit : en affichant un repère en alignement avec la direction de télémètre à laser déterminée que cette direction soit décalée ou pas par rapport à un centre d'affichage ; soit en affichant un repère au niveau du centre d'affichage et en alignant une image affichée pour amener la direction du télémètre à laser sur le centre d'affichage.

13. Procédé selon la revendication 1 incluant, avant de capturer des données, l'alignement du ou des plusieurs capteur(s) d'orientation sur la direction de télémètre à laser.

14. Procédé selon la revendication 1, incluant la communication de données capturées en provenance du module télémètre (15) au dispositif portable (2).
